# EUROPEAN PATENT SPECIFICATION

(11) **EP 4 542 122 B1**
(45) Date of publication and mention of the grant of the patent: **08.07.2026**
(21) Application number: 24206858.3
(22) Date of filing: 16.10.2024
(51) Int. Cl.: F24C 15/32, F24C 7/08, A23B 4/044, A23B 4/052, F24C 15/00

(54) **OVEN WITH SMOKE AND HERB FLAVORING GENERATOR**
GARGERÄT MIT RAUCH- UND KRÄUTERAROMAERZEUGER
APPAREIL DE CUISSON AVEC GÉNÉRATEUR D'ARÔMES DE FUMÉE ET D'HERBES

(30) Priority: 17.10.2023 US 202318488550
(43) Date of publication of application: 23.04.2025
(73) Proprietor: Beko Europe Management S.r.l., 20156 Milano (IT)
(72) Inventor: PACIONI, Annalisa, 20091 BRESSO (MI) (IT); GALLIVANONI, Andrea, 21011 CASORATE SEMPIONE (VA) (IT); BOCCO, Tomás Marcelo, 21018 SESTO CALENDE (VA) (IT); DISTASO, Luca, 21024 BIANDRONNO (VA) (IT); SINELLI, Nicoletta Giovanna, 21024 BIANDRONNO (VA) (IT)
(74) Representative: Buzzi, Notaro & Antonielli d'Oulx S.p.A.

(56) References cited:
- EP-A1- 2 009 356
- WO-A1-2022/146760
- KR-A- 20130 031 610
- US-A1- 2017 112 154
- US-B2- 11 149 959

## Description

### TECHNICAL FIELD

Disclosed herein are smoke and herb flavoring generators for cooking appliances.

### BACKGROUND

Cooking appliances may include various cooking modes or cycles for specific food types, such as bake, roast, pizza, cookie, toast, popcorn, and bagel. Further, as meat and fish consumption is steadily increasing, smoking and additional flavoring options by way of separate appliances (e.g., smokers, etc.) are often desired.
WO 2022/146760 A1 discloses a cooking system which includes a housing having a hollow interior, a heating element operable to heat to said hollow interior, a food support surface arranged within said hollow interior, and a combustible substrate module removably positionable in said housing. When positioned in the housing, the combustible substrate module is arranged in fluid communication with the hollow interior and the combustible substrate module is disposed remote of the food support surface.
EP 2 009 356 A1 discloses a smoke and electric heating oven which includes an oven muffle provided with a cavity therein, a smoke generator with a heating box installed in the cavity, and an outer casing. The oven muffle has a first heating element installed outside the cavity, and a second heating element installed in the cavity, which extends into the heating box. The first heating element transmits heat to the receiving chamber to bake an object in the receiving chamber, and the second heating element can heat wooden chips that is placed in the heating box to produce smoke to smoke the baked object in the receiving chamber, thereby providing the oven with the function of baking with electric heat and smoking with wooden chips.
KR 2013 0031610 A discloses cooker provided with a smoke generator. In one side of the main body of the cooker a smoke camber is defined, configured for removably receiving a container to be filled with smoking generation material, and provided with a subsidiary heater used to generate smoke by heating the smoking generation material contained in the container.
US 2017/112154 A1 discloses an oven comprising a cooking chamber and a device for smoking and/or flavoring foodstuffs, the device comprising at least one container capable of being placed inside the cooking chamber and able to contain substances suitable for generating smoke for smoking and/or vapors for flavoring, as well as a heat source provided for transferring heat to said substances for the purpose of smoking and/or flavoring the foodstuffs.
US 11 149 959 B2 discloses a cooking apparatus which includes a cooking chamber, a heating portion installed in the cooking chamber, and a smoking agent accommodation portion separably mounted on the heating portion and capable of accommodating a smoking agent.

### SUMMARY

An oven includes a cabinet defining a cavity having a plurality of walls for receiving food to be cooked, wherein at least one of the plurality of walls defines a receptacle; a drawer assembly for housing flavor items configured to add flavor to the food, the drawer assembly configured to be received by the receptacle; and a heating element configured to heat the flavor items to release the flavor to the food.

An oven for controlling a heating process includes a cabinet defining a cavity having a plurality of walls for receiving food to be cooked, wherein at least one of the plurality of walls defines a receptacle; a drawer assembly configured to be received by the receptacle for housing flavor items configured to add flavor to the food; a heating element configured to heat the flavor items to release the flavor to the food; a temperature sensor arranged in thermal contact with the drawer and configured to detect a drawer temperatures; and a processor, programmed to receive the drawer temperature from the temperature sensor and at least one user selection via a user interface, and control the heating element based on at least one of the drawer temperature and the user selection.
The invention is defined in claim 1. Preferred characteristics of the invention are indicated in the dependent claims.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
Figure 1 illustrates a front perspective view of an example oven configured to perform cooking cycles;
Figure 2 illustrates a front perspective view of an example cavity back including a drawer assembly;
Figure 3 illustrates a partial view of the example cavity back of Figure 2 and a zoomed in version of the drawer assembly;
Figure 4 illustrates a rear view of the cavity back of the example oven of Figure 1;
Figure 5 illustrates a rear view of the cavity back 110 for another example oven assembly; and
Figure 6 illustrates an example controller configured to operate the components of the oven to perform cooking cycles.

### DETAILED DESCRIPTION

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

Cooking meals is a part of daily life for many people. People generally prioritize taste, nutrition, cost, and ease of preparation when planning their meals. Further, as meat and fish consumption is steadily increasing, individuals are opting to buy taste-specific appliances such as smokers to achieve additional flavoring options. However, such appliances require additional space, some necessitating outdoor use. Additionally, these appliances may be larger, as well as expensive. Other smaller appliances, such as heat guns, torches, etc., may be used to flavor food via dedicated attachments. However, these appliances often require hand holding of the appliance on the food to be flavored.

Disclosed herein is a drawer assembly for a cooking appliance such as an oven. Such assembly may allow users to enjoy the functionality of a smoking appliance, within the comfort of their homes and without the need for a dedicated appliance. The assembly also allows for the possibility of combining smoking processes with other more traditional cooking processes such as roasting, forced convection, etc. Thus, it may now be possible for users to obtain combination flavors that are traditionally not possible with separate cooking and smoking appliances.

The drawer assembly is housed in a dedicated opening in the back wall of the oven cavity. The drawer assembly is near or close to a heating element, i.e., at a distance therefrom which enables heating of the flavor items contained in the drawer assembly, to release flavors to the food to be cooked. The drawer assembly may have small holes on one or more sides in order to facilitate oxygenation and circulation of the smoke. This may be further facilitated via airflow generated by an oven fan, typically mounted concentrically to the ring element. In another embodiment, the drawer assembly may have different amounts and sizes of holes in order to optimize and customize smoke circulation inside the oven cavity.

The drawer assembly may be easily removable to clean and refill. The drawer assembly may be configured to hold wood chips, for example, and may include a handle on a front face to facilitate inserting and removing of the drawer assembly from the receptacle in the oven wall.

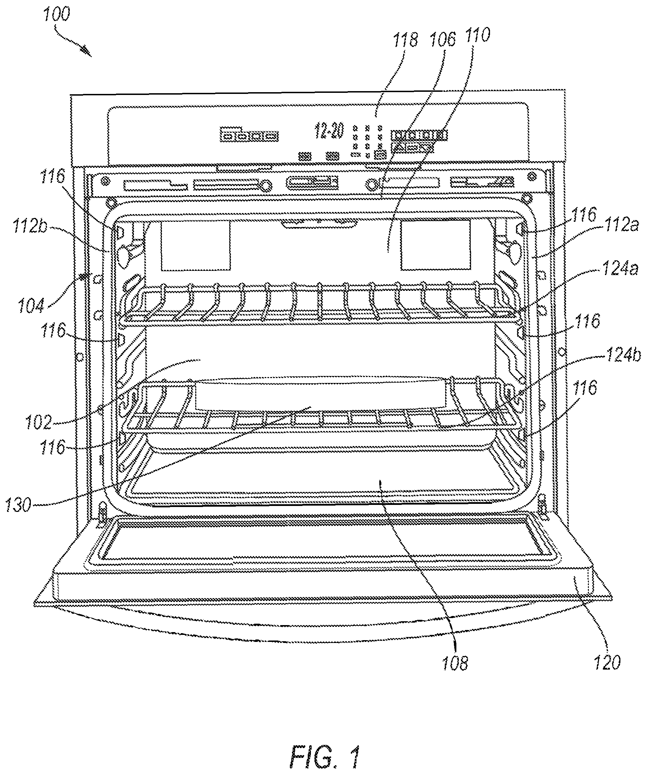

Figure 1 illustrates an example front perspective view of an oven 100 configured to perform real-time automated cooking cycles. The oven 100 may be one of various cooking appliances, such as a conventional oven, a convection oven, a conduction oven, a microwave oven, a toaster oven. In some examples, the oven 100 may be a function-specific oven, such as a roaster oven, a pizza oven, etc. The oven 100 may be a standalone oven in some cases, while in other cases the oven may be built-in or a component of a combination oven and stove top.

The oven 100 has a cabinet 104 and defines a cavity 102 having a cavity top 106, cavity bottom 108, cavity back 110, and side walls 112. A door assembly 120 may be hinged at a front of the cavity bottom 108 to permit access to the cavity 102. The door assembly 120 may include a window and a handle, and may hermetically seal the cavity when the door is in a closed position. It should be noted that this is an example, and ovens 100 with different types of doors may be used. For instance, a door may be hinged at a side instead of the bottom. A door sensor may be arranged on the door or the cavity 102 to detect an open and closed position of the door of the door assembly 120.

The cavity 102 is configured to receive food items for cooking, baking, and/or broiling during a cooking cycle. The cavity 102 may also include temperature sensors 116 for determining the air temperature within the cavity 102 during cooking. The oven 100 may further include a user interface 118 configured to receive user input with respect to cycles or other oven operation. The user interface 118 may also provide information to the user such as cook time, temperature, smoke and herb flavoring settings, etc. Specifically, users may be able to select certain smoking options via the user interface 118, such as type of items to smoke (wood, herbs, etc.), time, food items, etc.

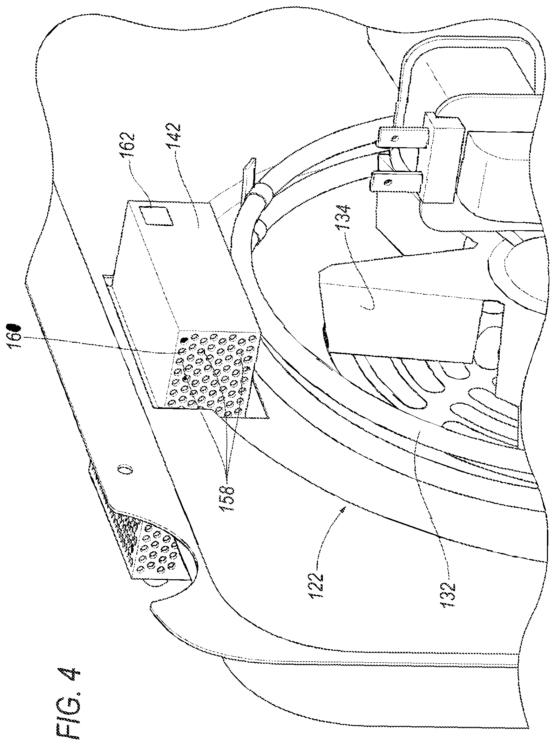

As best shown in Figure 4, the oven 100 includes a heating system 122 for heating the cavity 102 during cooking. The heating system 122 may include one or more heating elements, such as a gas heating element or an electric heating element. In the example shown in Figure 4, the heating system 122 may include a heat ring 132 arranged behind the cavity back 110. A fan assembly 134 may be arranged in the center of the heat ring 132. The fan assembly 134 may be configured to circulate air through the cavity 102 during heating of the cavity 102.

Referring back to Figure 1, the oven 100 may include one or more racks 124 within the cavity 102 for supporting the food items during cooking. As shown by way of example in Figure 1, the oven 100 may include a top rack 124a and a bottom rack 124b (collectively referred to herein as racks 124). It should be noted that while two racks 124 are shown, ovens 100 with more or fewer racks 124 are possible. Regardless of quantity, the racks 124 may rest on side rails arranged along the side walls 112. The side rails may extend parallel or generally parallel with the cavity top 106 and cavity bottom 108 along the side walls 112 at spaced intervals. The side rails may extend up the height of the side walls 112 to allow for varying positions of the racks 124 within the cavity 102. For each side rail arranged on the first side wall 112a, a corresponding side rail is arranged on the opposite second side wall 112b (generally at the same relative height) so that the rack 124 may be evenly maintained on each side thereof. As explained, food may be placed in a container 130 on one of the racks 124 for cooking.

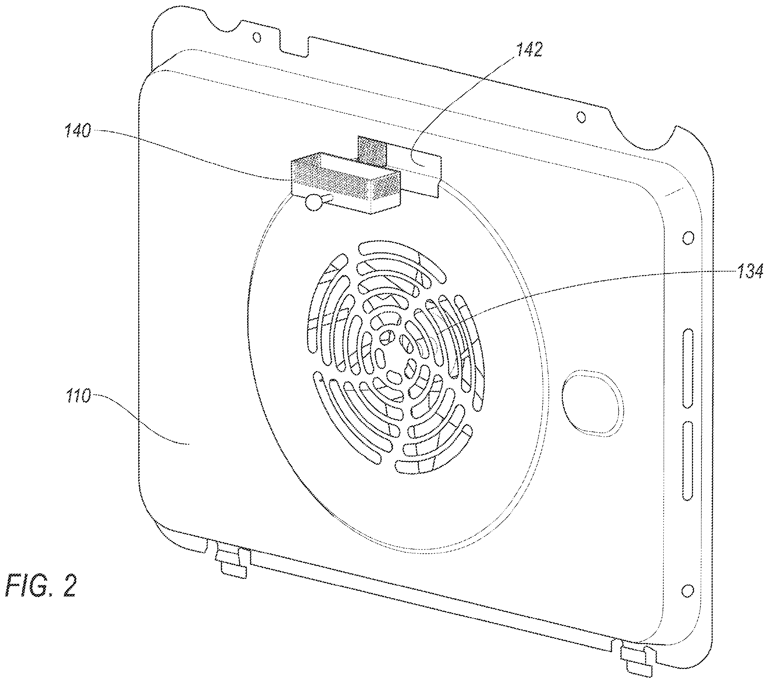

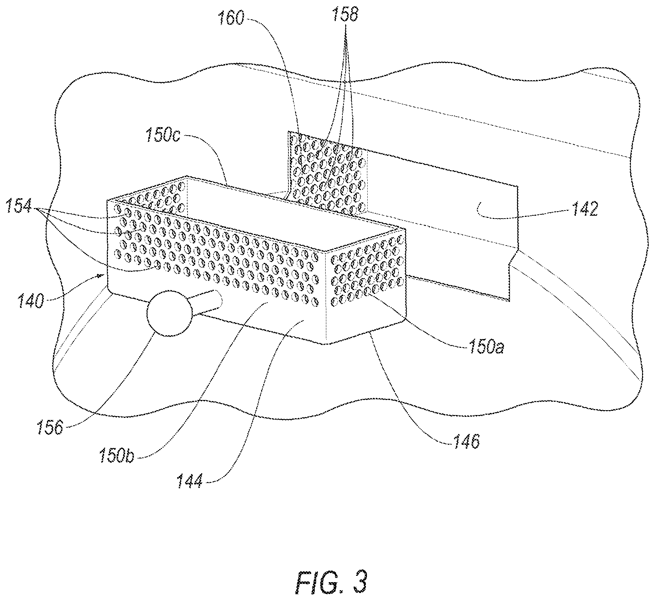

Figure 2 illustrates a front perspective view of an example cavity back 110 including a drawer assembly 140. Figure 3 illustrates a partial view of the example cavity back 110 and a zoomed in version of the drawer assembly 140. Referring to Figures 2 and 3, the cavity back 110 defines at least one receptacle 142 configured to receive the drawer assembly 140.

The drawer assembly 140 may be a cuboid or cube, but may also take on other shapes. In the example shown in Figures 2 and 3, the drawer assembly 140 may include a drawer portion 144 having an open top and being configured to receive items, such as wood chips, herbs, etc. These items, as explained, may be used to add flavoring to the food. The drawer portion 144 may include four sides 150, including two sides 150a, a drawer front 150b, and a drawer back 150c, and a drawer bottom 146. At least a portion of the four sides 150 may define a plurality of drawer openings 154. In one example, the sides 150a and front 150b may define the openings 154, while the back 150c is solid. The drawer openings 154 may allow for air to circulate through the drawer assembly 140, allowing particles from the items within the drawer portion 144 to circulate throughout the cavity 102 of the oven 100. While the openings 154 are shown as a plurality of round holes, other shapes, sizes and variations may be appreciated. Slots may be used, as well as a combination of slots, holes, etc. The openings 154 may be dimensioned such as to create a large enough air flow while maintaining the items within the drawer and the rigidity of the drawer sides 150.

The drawer assembly 140 may include a handle 156. The handle 156 may be arranged on the drawer front 150b to allow a user to easily insert and remove the drawer assembly 140 from the receptacle 142. The handle 156 may be made of a similar material as that of the drawer portion 144, such as metal. However, in some examples, the handle 156 may be made of a heat resistant material such as silicon. In some examples, the handle 156 may connect to a grasping tool. The grasping tool may allow users to easily reach the drawer assembly 140 without having to reach into the oven 100.

Similarly, the receptacle 142 may also define a cuboid of similar dimensions to the drawer assembly 140 in order to receive the drawer assembly 140. The receptacle 142 is illustrated in Figure 2 as being arranged near the top of the cavity back 110 of the oven cavity 102. At least one of the sides defining the receptacle 142 may define a plurality of receptacle openings 158. These openings may be similar to and aligned with the drawer openings 154 in that the openings allow air to flow therethrough.

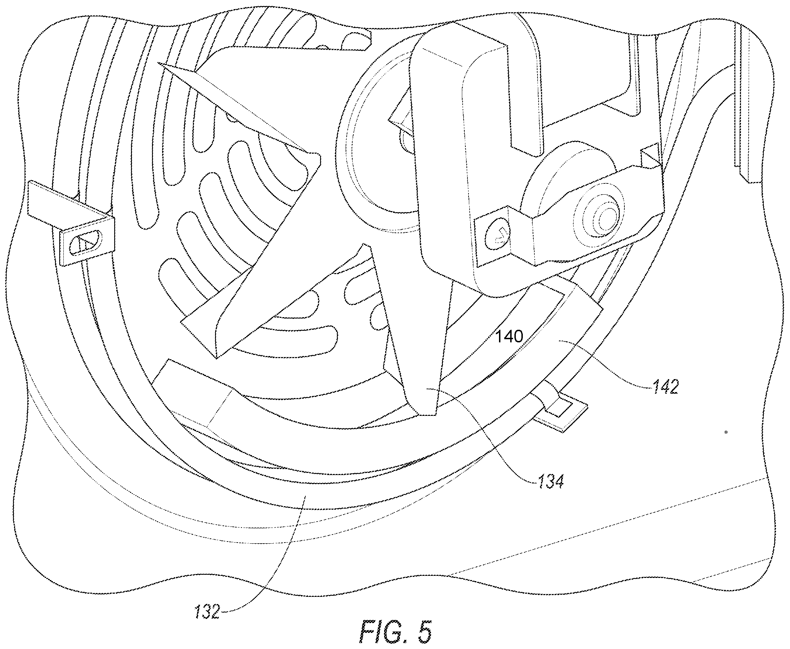

Such air flow may be generated, in part, by the fan assembly 134 as described in more detail with respect to Figures 4 and 5. The fan assembly 134, which is labeled in Figure 2, but best shown in Figures 4 and 5, may be arranged behind the cavity back 110 and may circulate air through the oven cavity 102. The receptacle openings are illustrated as being defined on a receptacle side 160, though additional openings may be defined on a back and bottom of the receptacle. The receptacle openings 158 may be configured to align with the drawer openings 154 when the drawer assembly 140 is inserted in the receptacle 142. The receptacle openings 158 are further illustrated in Figure 4.

Similar to the drawer openings 154, while the receptacle openings 158 are shown as a plurality of round holes, other shapes, sizes and variations may be appreciated. Slots may be used, as well as a combination of slots, holes, etc. The receptacle openings 158 may be dimensioned such as to create a large enough air flow while maintaining the rigidity of the receptacle shape.

Figure 4 illustrates a rear view of the cavity back 110, where the receptacle 142 is arranged adjacent, and specifically above the heat ring 132. By arranging the receptacle 142, and thus the drawer assembly 140, adjacent to the heat ring 132, the heat ring 132 may provide heat to the drawer assembly 140 and the contents therein. Such heat may cause the contents of the drawer portion 144 to start to smoke and release certain aromas, particles, etc., from the contents (e.g., wood chips, herbs, etc.,). The fan assembly 134 may circulate air through the cavity 102 as well as through the receptacle 142 and drawer assembly 140. The air circulation aids in the release of flavoring from the contents of the drawer portion 144 and increases distribution throughout the cavity, thus allowing flavoring to be added to food within the oven cavity.

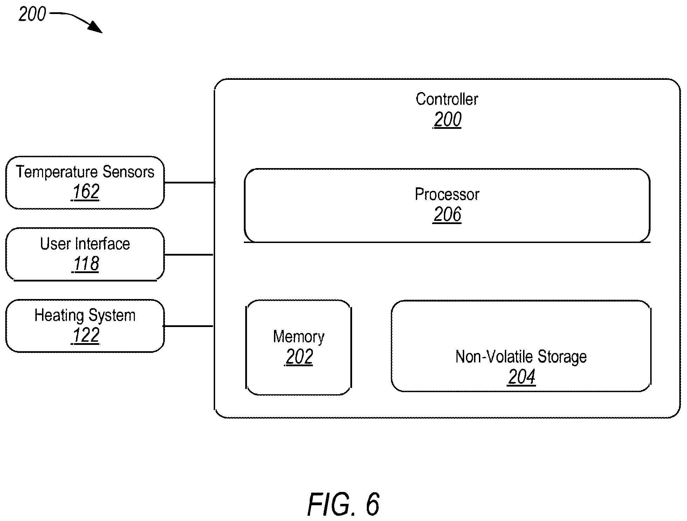

A temperature sensor 162 may be arranged at, near, or within the receptacle 142, as best illustrated in Figure 4. The temperature sensor 162 may be configured to detect the temperature of the drawer assembly 140. The temperature sensor 162 may be in communication with a controller (illustrated and explained further with respect to Figure 6) for controlling the heating of the drawer assembly contents.

Figure 5 illustrates a rear view of the cavity back 110 for another example drawer assembly 140. In this example, the drawer assembly 140 is arranged adjacent to the heat ring 132, but has a concave-like shape. In this example, the drawer assembly 140 may mimic the curvature of the heat ring 132. This may allow more surface area of the drawer assembly 140 to be adjacent to the heat ring 132, thus allowing more heat to transfer to the drawer assembly 140, and therefore allowing greater distribution of flavoring through the cavity 102. Though not shown, features such as the receptacle 142, drawer openings 154 and receptacle openings 158 may also be appreciated with this example.

Further, while a single fan assembly 134, heat ring 132, drawer assembly 140, etc., are illustrated in the figures, it may be appreciated that more than one of each of these elements may be incorporated into the oven 100. In one example, two fans at each top corner of the oven 100 may be included. The drawer assembly 140 may be arranged between the fans, or multiple drawer assemblies may be included. The heating element, while shown as a ring 132, may be in other forms or shapes.

Figure 6 illustrates an example controller configured to operate the components of the smart oven. The controller 200 may include a memory 202, a non-volatile storage 204, and a processor 206. The non-volatile storage 204 may store operations for smoke and herb flavoring settings.

The memory 202 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. The non-volatile storage 204 may include one or more persistent data storage devices such as a hard drive, optical drive, tape drive, non-volatile solid-state device, cloud storage or any other device capable of persistently storing information.

The processor 206 may include one or more microprocessors, micro-controllers, digital signal processors, microcomputers, central processing units (CPU), graphical processing units (GPU), tensor processing units (TPU), field programmable gate arrays, programmable logic devices, state machines, logic circuits, analog circuits, digital circuits, or any other devices that manipulate signals (analog or digital) based on computer-executable instructions residing in memory 202.

The processor 206 may be configured to read into memory 202 and execute computer-executable instructions residing in the non-volatile storage 204. Upon execution by the processor 206, the computer-executable instructions may cause the oven 100 to implement one or more of the algorithms and/or methodologies disclosed herein.

The controller 200 may be electrically connected to signaling interfaces of other components of the smart oven 100, thereby allowing the processor 206 of the controller 200 to manipulate the functions of the smart oven 100. For example, the controller 200 may be configured to receive user input from the user interface 118, such as requests to initiate a cooking cycle. The controller 200 may also be configured to control operation of the heating system 122, including to apply power to heating elements of the heating system 122 to warm the cavity 102, as well as to discontinue applying power to the heating element of the heating system 122, in addition to controlling the fan assembly 134. The controller 200 may also control a door lock to selectively control the latch mechanism of the door assembly 120 to prevent the door assembly 120 from being opened during the cycle.

The controller 200 may also be configured to receive input from other sensors to support the operation of the oven, including smoking and/or flavoring preferences. This may include input from sensors such as the temperature sensor 162. This may also include input from one or more additional sensors throughout the oven 100.

The temperature sensor 162 may detect the temperature of the drawer assembly 140. The controller 200 may receive a drawer temperature and use the drawer temperature to control the heating system 122 so that the content of the drawer assembly achieves a desired temperature. For example, the controller 200 may heat the heat ring 132 with a specific heat profile over time. The heat ring 132 may heat the wood chips to the point where they begin to smoke, thus releasing the desirable flavor compounds. It is also desirable to not completely burn the wood chips, which may result in undesirable, more acrid, compounds to be released. In one example, the desired temperature is below 350 degrees Celsius. The user may select a dedicated program via the user interface 118 to activate a smoking feature or function, in combination with other cooking functions or settings.

Further, while wood chips are used as an example herein, other contents may be used to flavor food via the drawer assembly 140. For example, chopped or minced herbs or a combination of herbs and wood chips may be used (e.g., rosemary, juniper, sage, etc.). The user has the ability to customize a preferred flavor based on combinations, quantities, etc. In the example of herbs, a specific setting via the user interface 118 may be selected, as herbs require a lower temperature than wood chips for their aromatic compounds to be released without burning. Thus, a dedicated program may be used to activate the herb flavoring function. Further, specific herbs may each have a specific temperature profile.

Accordingly, a smoke and herb flavoring generator for a cooking appliance is described herein. The small drawer capable of housing items that add flavoring to food may be arranged in a housing in the back wall of the oven. The small holes in the housing and the drawer may allow oxygenation and circulation of the smoke, imparted by airflow generated by the main cavity fan. The fan may be mounted concentrically with a ring element to allow heat to best reach the items in the drawer. Other variations of the drawer shape, hole arrangement and configuration may be appreciated.

Users may thus easily remove the drawer and reinsert the drawer at will. Further, such integration with a household appliance reduces the need for an additional, large appliance for a smoking function.

While exemplary embodiments are described above, it is not intended that these embodiments describe all possible forms of the disclosure. Rather, the words used in the specification are words of description rather than limitation, and it is understood that various changes may be made without departing from the scope of the appended claims. Additionally, the features of various implementing embodiments may be combined to form further embodiments of the disclosure.

## Claims

1. An oven (100) for controlling a heating process, comprising:
a cabinet (104) defining a cavity (102) having a plurality of walls (106, 108, 110, 112) for receiving food to be cooked, wherein at least one of the plurality of walls defines a receptacle (142);
a drawer assembly (140) configured to be received by the receptacle (142) for housing flavor items to add flavor to the food;
a heating system (122) for heating the cavity (102) during cooking;
a heating element (132) configured to heat the flavor items contained in the drawer assembly (140) to release the flavor to the food to be cooked,
**characterized in that** the heating element (132) belongs to said heating system (122) and is arranged behind a back wall (110) of the cavity (102), and **in that** the receptacle (142) is formed in the back wall (110) of the cavity (102) and defines dedicated opening in the back wall (110) of the cavity (102), said opening housing the drawer assembly (140), said receptacle (142) recessed in the back wall (110) and thus arranged adjacent to the heating element (132) together with the drawer assembly (140).

2. The oven (100) of claim 1, wherein a temperature sensor (162) is arranged in thermal contact with the drawer assembly (140) and is configured to detect drawer temperatures.

3. The oven (100) of claim 2, further comprising a processor (206) programmed to receive a drawer temperature from the temperature sensor (162) and at least one user selection via a user interface (118), and to control the heating element (132) based on at least one of the drawer temperature and the user selection.

4. The oven (100) of claim 3, wherein the user selection includes a smoke feature and flavor source and wherein the processor (206) is further programmed to control the temperature of the heating element (132) based at least in part on the flavor source.

5. The oven (100) of anyone of the preceding claims, wherein the drawer assembly (140) includes a drawer portion defined by a plurality of sides (150), at least one of the plurality of sides defining a plurality of drawer openings (154) configured to allow air to circulate therethrough to disperse the flavor into the cavity (102).

6. The oven (100) of claim 5, wherein the receptacle (142) defines a plurality of receptacle openings (158) configured to allow air to circulate to the drawer assembly (140) when the drawer assembly (140) is inserted in the receptacle (142).

7. The oven (100) of claim 6, wherein at least a portion of the receptacle openings (158) align with the drawer openings (154) when the drawer assembly (140) is inserted in the receptacle (142).

8. The oven (100) of anyone of the preceding claims, further comprising a fan assembly (134) arranged within the at least one of the walls defining the receptacle (142) to generate an air flow through the receptacle (142) and the drawer assembly (140) when the drawer assembly (140) is inserted in the receptacle (142).

9. The oven (100) of claim 8, wherein the heating element (132) is a heat ring and the fan assembly (134) is mounted concentrically to said heat ring.

10. The oven (100) of claim 9, wherein the receptacle (142) is arranged adjacent, and above the heat ring (132).

11. The oven (100) of anyone of the preceding claims, wherein the drawer assembly (140) includes a handle (156) to facilitate removal from and insertion into the receptacle (142).

12. The oven (100) of anyone of the previous claims, wherein the drawer assembly (140) and the receptacle (142) are each cuboids.

13. The oven (100) of anyone of claims 1 to 11, wherein the heating element (132) is a heat ring and wherein the drawer assembly (140) forms a curved shape and is arranged around a curve of the heat ring (132) when inserted in the receptacle (142).

14. The oven (100) of claim 13, wherein the drawer assembly (140) has a concave-like shape mimicking a curvature of the heat ring (132).

## Patentansprüche

1. Ein Ofen (100) zur Steuerung eines Heizprozesses, umfassend:
ein Gehäuse (104), das einen Garraum (102) mit einer Vielzahl von Wänden (106, 108, 110, 112) zur Aufnahme von zu garenden Lebensmitteln definiert, wobei mindestens eine der Vielzahl von Wänden eine Aufnahme (142) definiert;
eine Schubladenbaugruppe (140), die konfiguriert ist, um von der Aufnahme (142) aufgenommen zu werden, um Aromatisierungselemente zum Aromatisieren der Lebensmittel zu beherbergen;
ein Heizsystem (122) zum Erhitzen des Garraums (102) während des Garens;
ein Heizelement (132), das konfiguriert ist, um die in der Schubladenbaugruppe (140) enthaltenen Aromatisierungselemente zu erhitzen, um Aromastoffe an die zu garenden Lebensmittel abzugeben,
**dadurch gekennzeichnet, dass** das Heizelement (132) zu dem Heizsystem (122) gehört und hinter einer Rückwand (110) des Garraums (102) angeordnet ist, und dass die Aufnahme (142) in der Rückwand (110) des Garraums (102) ausgebildet ist und eine dafür vorgesehene Öffnung in der Rückwand (110) des Garraums (102) definiert, wobei die Öffnung die Schubladenbaugruppe (140) aufnimmt, wodurch die Aufnahme (142) in die Rückwand (110) eingelassen und somit zusammen mit der Schubladenbaugruppe (140) benachbart zu dem Heizelement (132) angeordnet ist.

2. Der Ofen (100) nach Anspruch 1, wobei ein Temperatursensor (162) in thermischem Kontakt mit der Schubladenbaugruppe (140) angeordnet ist und dazu konfiguriert ist, Schubladentemperaturen zu erfassen.

3. Der Ofen (100) nach Anspruch 2, ferner umfassend einen Prozessor (206), der programmiert ist, um eine Schubladentemperatur von dem Temperatursensor (162) und mindestens eine Benutzerauswahl über eine Benutzerschnittstelle (118) zu empfangen, und um das Heizelement (132) basierend auf mindestens einer von der Schubladentemperatur und der Benutzerauswahl zu steuern.

4. Der Ofen (100) nach Anspruch 3, wobei die Benutzerauswahl eine Räucherfunktion und eine Aromaquelle einschließt und wobei der Prozessor (206) ferner programmiert ist, um die Temperatur des Heizelements (132) basierend zumindest teilweise auf der Aromaquelle zu steuern.

5. Der Ofen (100) nach einem der vorhergehenden Ansprüche, wobei die Schubladenbaugruppe (140) einen Schubladenteil umfasst, der durch eine Vielzahl von Seiten (150) definiert ist, wobei mindestens eine der Vielzahl von Seiten eine Vielzahl von Schubladenöffnungen (154) definiert, die konfiguriert sind, um Luft durch diese zirkulieren zu lassen, zur Verteilung des Aromas in den Garraum (102).

6. Der Ofen (100) nach Anspruch 5, wobei die Aufnahme (142) eine Vielzahl von Aufnahmeöffnungen (158) definiert, die konfiguriert sind, um Luft zu der Schubladenbaugruppe (140) strömen zu lassen, wenn die Schubladenbaugruppe (140) in die Aufnahme (142) eingesetzt ist.

7. Der Ofen (100) nach Anspruch 6, wobei mindestens ein Teil der Aufnahmeöffnungen (158) mit den Schubladenöffnungen (154) fluchtet, wenn die Schubladenbaugruppe (140) in die Aufnahme (142) eingesetzt ist.

8. Der Ofen (100) nach einem der vorhergehenden Ansprüche, ferner umfassend eine Lüfterbaugruppe (134), die in der mindestens einen Wand, die die Aufnahme (142) definiert, angeordnet ist, um einen Luftstrom durch die Aufnahme (142) und die Schubladenbaugruppe (140) zu erzeugen, wenn die Schubladenbaugruppe (140) in die Aufnahme (142) eingesetzt ist.

9. Der Ofen (100) nach Anspruch 8, wobei das Heizelement (132) ein Heizring ist und die Lüfterbaugruppe (134) konzentrisch zu dem genannten Heizring montiert ist.

10. Der Ofen (100) nach Anspruch 9, wobei die Aufnahme (142) benachbart zu und oberhalb des Heizrings (132) angeordnet ist.

11. Der Ofen (100) nach einem der vorhergehenden Ansprüche, wobei die Schubladenbaugruppe (140) einen Griff (156) umfasst, um das Entfernen aus der Aufnahme (142) und das Einsetzen in die Aufnahme (142) zu erleichtern.

12. Der Ofen (100) nach einem der vorhergehenden Ansprüche, wobei die Schubladenbaugruppe (140) und die Aufnahme (142) jeweils Quader sind.

13. Der Ofen (100) nach einem der Ansprüche 1 bis 11, wobei das Heizelement (132) ein Heizring ist und wobei die Schubladenbaugruppe (140) eine gekrümmte Form bildet und um eine Krümmung des Heizrings (132) herum angeordnet ist, wenn sie in die Aufnahme (142) eingesetzt ist.

14. Der Ofen (100) nach Anspruch 13, wobei die Schubladenbaugruppe (140) eine konkavartige Form aufweist, die eine Krümmung des Heizrings (132) nachbildet.

## Revendications

1. Un four (100) pour commander un processus de chauffage, comprenant :
un caisson (104) définissant une cavité (102) ayant une pluralité de parois (106, 108, 110, 112) pour recevoir des aliments à cuire, dans lequel au moins l'une de la pluralité de parois définit un réceptacle (142) ;
un ensemble tiroir (140) configuré pour être reçu par le réceptacle (142) pour loger des éléments aromatisants destinés à ajouter de l'arôme aux aliments ;
un système de chauffage (122) pour chauffer la cavité (102) pendant la cuisson ;
un élément chauffant (132) configuré pour chauffer les éléments aromatisants contenus dans l'ensemble tiroir (140) afin de libérer l'arôme vers les aliments à cuire,
**caractérisé en ce que** l'élément chauffant (132) appartient audit système de chauffage (122) et est agencé derrière une paroi arrière (110) de la cavité (102), et **en ce que** le réceptacle (142) est formé dans la paroi arrière (110) de la cavité (102) et définit une ouverture dédiée dans la paroi arrière (110) de la cavité (102), ladite ouverture logeant l'ensemble tiroir (140), de sorte que ledit réceptacle (142) est en retrait dans la paroi arrière (110) et ainsi agencé de manière adjacente à l'élément chauffant (132) conjointement avec l'ensemble tiroir (140).

2. Le four (100) selon la revendication 1, dans lequel un capteur de température (162) est agencé en contact thermique avec l'ensemble tiroir (140) et est configuré pour détecter des températures de tiroir.

3. Le four (100) selon la revendication 2, comprenant en outre un processeur (206) programmé pour recevoir une température de tiroir provenant du capteur de température (162) et au moins une sélection d'utilisateur via une interface utilisateur (118), et pour commander l'élément chauffant (132) sur la base d'au moins l'un de la température de tiroir et de la sélection d'utilisateur.

4. Le four (100) selon la revendication 3, dans lequel la sélection d'utilisateur inclut une fonction de fumage et une source d'arôme et dans lequel le processeur (206) est en outre programmé pour commander la température de l'élément chauffant (132) sur la base au moins en partie de la source d'arôme.

5. Le four (100) selon l'une quelconque des revendications précédentes, dans lequel l'ensemble tiroir (140) inclut une partie tiroir définie par une pluralité de côtés (150), au moins l'un de la pluralité de côtés définissant une pluralité d'ouvertures de tiroir (154) configurées pour permettre à l'air de circuler à travers celles-ci afin de disperser l'arôme dans la cavité (102).

6. Le four (100) selon la revendication 5, dans lequel le réceptacle (142) définit une pluralité d'ouvertures de réceptacle (158) configurées pour permettre à l'air de circuler vers l'ensemble tiroir (140) lorsque l'ensemble tiroir (140) est inséré dans le réceptacle (142).

7. Le four (100) selon la revendication 6, dans lequel au moins une partie des ouvertures de réceptacle (158) s'aligne avec les ouvertures de tiroir (154) lorsque l'ensemble tiroir (140) est inséré dans le réceptacle (142).

8. Le four (100) selon l'une quelconque des revendications précédentes, comprenant en outre un ensemble ventilateur (134) agencé à l'intérieur de l'au moins une des parois définissant le réceptacle (142) pour générer un flux d'air à travers le réceptacle (142) et l'ensemble tiroir (140) lorsque l'ensemble tiroir (140) est inséré dans le réceptacle (142).

9. Le four (100) selon la revendication 8, dans lequel l'élément chauffant (132) est un anneau chauffant et l'ensemble ventilateur (134) est monté concentriquement audit anneau chauffant.

10. Le four (100) selon la revendication 9, dans lequel le réceptacle (142) est agencé adjacent, et au-dessus de l'anneau chauffant (132).

11. Le four (100) selon l'une quelconque des revendications précédentes, dans lequel l'ensemble tiroir (140) inclut une poignée (156) pour faciliter son retrait du réceptacle (142) et son insertion dans celui-ci.

12. Le four (100) selon l'une quelconque des revendications précédentes, dans lequel l'ensemble tiroir (140) et le réceptacle (142) sont chacun des parallélépipèdes rectangles.

13. Le four (100) selon l'une quelconque des revendications 1 à 11, dans lequel l'élément chauffant (132) est un anneau chauffant et dans lequel l'ensemble tiroir (140) présente une forme incurvée et est agencé autour d'une courbure de l'anneau chauffant (132) lorsqu'il est inséré dans le réceptacle (142).

14. Le four (100) selon la revendication 13, dans lequel l'ensemble tiroir (140) a une forme concave épousant une courbure de l'anneau chauffant (132).
